# EUROPÄISCHE PATENTSCHRIFT

(11) **EP 3 719 632 B1**
(45) Veröffentlichungstag und Bekanntmachung des Hinweises auf die Patenterteilung: **26.11.2025**
(21) Anmeldenummer: 20162486.3
(22) Anmeldetag: 11.03.2020
(51) Int. Cl.: G06F 8/36, G06F 8/41

(54) **VERFAHREN UND VORRICHTUNG ZUR VERWALTUNG VON SOFTWAREMODULEN UND VON OBJEKTEN**
METHOD AND DEVICE FOR MANAGING SOFTWARE MODULES AND OBJECTS
PROCÉDÉ ET DISPOSITIF DE GESTION DES MODULES LOGICIELS ET DES OBJETS

(30) Priorität: 02.04.2019 DE 102019108602
(43) Veröffentlichungstag der Anmeldung: 07.10.2020
(73) Patentinhaber: Vector Informatik GmbH, 70499 Stuttgart (DE)
(72) Erfinder: Eyl, Martin, 70794 Filderstadt (DE); Reichmann, Clemens, 76228 Karlsruhe (DE)
(74) Vertreter: Patentanwälte Bregenzer und Reule Partnerschaftsgesellschaft mbB

(56) Entgegenhaltungen:
- US-A1- 2008 022 259
- US-A1- 2010 088 666
- US-A1- 2018 157 485

## Beschreibung

Die Erfindung betrifft ein Verfahren zur Verwaltung von Softwaremodulen und von Objekten, insbesondere Steuergeräten eines Kraftfahrzeugs, in einer Datenbank, in der Objekte gespeichert sind und in der einem jeweiligen Objekt mindestens ein Softwaremodul zur Bereitstellung mindestens einer Funktion des Objektes zugeordnet ist, sowie eines Vorrichtung zur Verwaltung von Softwaremodulen und von Objekten, insbesondere Steuergeräten eines Kraftfahrzeugs, wobei die Vorrichtung eine Datenbank aufweist, in der Objekte gespeichert sind und in der einem jeweiligen Objekt mindestens ein Softwaremodul zur Bereitstellung mindestens einer Funktion des Objektes zugeordnet ist.

Ein derartiges Verfahren wird beispielsweise in US 2018/157485 A1 und US 2010/088666 A1 beschrieben.

Die Verwaltung und Bearbeitung von Software für beispielsweise Steuergeräten eines Kraftfahrzeugs, ist eine aufwändige und große Sorgfalt erfordernde Aufgabe. Bei einer bekannten Datenbank, die von der Anmelderin unter der Bezeichnung PREEvision vermarktet wird, werden die funktionalen Anforderungen, die im Zusammenhang mit beispielsweise Steuergeräten stehen, als Objekte in der Datenbank gespeichert, wobei ein Objekt beispielsweise ein Steuergerät, eine funktionale Anforderung an das Steuergerät, eine Dokumentation für das Steuergerät oder dergleichen sein kann. Im Zusammenhang mit derartigen Objekten stehen Softwaremodule, zum Beispiel mit solcher Software, die durch ein Objekt ausführbar ist. So kann beispielsweise eine Software zum Betreiben eines Steuergeräts notwendig sein. Das Steuergerät steuert beispielsweise eine Funktion des Kraftfahrzeugs, zum Beispiel einen Fensterheber, und braucht dazu geeignete Software, die in Gestalt von einem oder mehreren Softwaremodulen in der Datenbank gespeichert sind.

Allerdings ist die Verwaltung derartiger Softwaremodule im Zusammenhang mit den Objekten und der Datenbank kompliziert. Zum Beispiel ist es notwendig, dass der Quellcode eines jeweiligen Softwaremoduls durch einen Compiler kompilierbar ist, sodass ein durch einen Prozessor des Objekts ausführbare Programmcode entsteht. Vorteilhaft ist es, wenn eine derartige Kompilierung auch dann möglich ist, wenn mehrere Programmierer parallel an dem Quellcode arbeiten. Die Versionskontrolle von Software ist auf diesem Wege schwierig realisierbar. Ferner bestehen zahlreiche Korrelationen zwischen den Objekten, die in der Datenbank abgebildet sind, beispielsweise Daten-Verbindungen zwischen Steuergeräten, sodass bei der Überarbeitung der Software für ein Steuergerät die Software des anderen Steuergeräts tangiert ist. Ein praktisches Erfordernis ist es, die Konsistenz bzw. Kompatibilität der Software für verschiedene Objekte in der Datenbank abzubilden und/oder aufrecht zu erhalten.

Es ist daher die Aufgabe der vorliegenden Erfindung, ein verbessertes Verfahren sowie eine verbesserte Vorrichtung bereitzustellen.

Zur Lösung der Aufgabe sind ein Verfahren gemäß der technischen Lehre des Anspruchs 1 und eine Vorrichtung gemäß der technischen Lehre des Anspruchs 14, sowie ein Computerprogrammprodukt gemäß der technischen Lehre des Anspruchs 15 vorgesehen.

Die Erzeugung einer abstrakten syntaktischen Struktur des Softwaremoduls durch syntaktisches Analysieren des Quellcodes sieht beispielsweise die Erzeugung eines Abstract Syntax Trees vor.

Der bearbeitbare Quellcode ist z.B. in der Programmiersprache C.

Die Vorrichtung kann beispielsweise einen Computer umfassen oder dadurch gebildet sein. Es ist auch möglich, dass die Vorrichtung ganz oder im Wesentlichen durch Programmcode realisiert ist. Die Vorrichtung umfasst beispielsweise die Bedienschnittstelle oder ist zur Kommunikation mit der Bedienschnittstelle ausgestaltet. Die Bedienschnittstelle umfasst beispielsweise einen Editor.

Die Erfindung kann aber auch durch ein Computerprogrammprodukt mit Programmcode realisiert sein, der durch einen Prozessor einer Vorrichtung, beispielsweise eines Computers, ausführbare Befehle enthält. Wenn der Prozessor die Befehle ausführt, wird beispielsweise das erfindungsgemäße Verfahren realisiert oder ausgeführt.

Das Computerprogrammprodukt umfasst in einer bevorzugten Variante die erwähnte und nachfolgend näher beschriebene Datenbank oder ist zur Kommunikation mit einer externen Datenbank ausgestaltet, die keinen Bestandteil der erfindungsgemäßen Vorrichtung oder des erfindungsgemäßen Computerprogrammprodukts bildet. Beispielsweise hat das Computerprogrammprodukt eine Datenbankschnittstelle für eine externe Datenbank.

Das Computerprogrammprodukt oder die Vorrichtung umfassen erfindungsgemäß die Bedienschnittstelle, insbesondere einen Editor, an dem Quellcode bearbeitbar ist.

Die abstrakte syntaktische Struktur kann eine einheitliche Struktur sein, die beispielsweise mehrere logische Schritte oder logische Abhängigkeiten, beispielsweise Schleifen, Bedingungen oder dergleichen, repräsentiert.

Vorteilhaft ist eine Ermittlung mindestens zweier Teilstrukturen einer abstrakten syntaktischen Struktur eines einem Objekt zugeordneten Softwaremoduls und individuelle Bereitstellung der mindestens zwei Teilstrukturen zur Bearbeitung an der Bedienschnittstelle und/oder Herstellung mindestens jeweils einer logischen Verbindung zwischen einer jeweiligen Teilstruktur und dem Objekt vorgesehen. Bevorzugt ist vorgesehen, dass mehrere Programmzeilen des Quellcodes eine Teilstruktur in der abstrakten syntaktischen Struktur darstellen. Zwischen den Teilstrukturen kann beispielsweise eine Verzweigung innerhalb der sie enthaltenden abstrakten syntaktischen Gesamt-Struktur vorgesehen sein. Eine derartige Verzweigung, die durch die syntaktische Analyse des vom Bediener erzeugten Quellcodes ermittelbar ist, kann also beispielsweise vom Computerprogrammprodukt oder der Vorrichtung als Teilstruktur ermittelt oder erkannt werden. Eine derartige Teilstruktur kann also beispielsweise ein Unterprogramm oder eine Funktion sein oder umfassen.

Es ist vorteilhaft, wenn die abstrakte syntaktische Struktur sozusagen fein granular ist, d. h. dass sie mehrere, beispielsweise zwei oder weitere Teilstrukturen umfasst oder in Teilstrukturen aufgegliedert ist, was beispielsweise die Bearbeitung oder Überarbeitung erleichtert. Eine Teilstruktur wiederum kann in weitere Teilstrukturen untergliedert sein.

Die mindestens eine logische Verknüpfung kann zwischen dem Objekt und der syntaktischen Struktur als Ganzes hergestellt sein oder bestehen. Es ist aber auch möglich, dass die mindestens eine logische Verknüpfung zwischen dem Objekt und einer oder mehreren Teilstrukturen der abstrakten syntaktischen Struktur besteht. Ohne weiteres sind mehrere logische Verknüpfungen zwischen dem Objekt oder Teilen des Objekts, beispielsweise Attributen des Objekts, und der abstrakten syntaktischen Struktur als Ganzes oder deren Teilstrukturen möglich.

Wenn nachfolgend ein Teil einer abstrakten syntaktischen Struktur erwähnt ist, handelt es sich vorzugsweise um eine Teilstruktur. Eine abstrakte syntaktische Struktur besteht also vorzugsweise aus mehreren, miteinander logisch verknüpften oder in logischer Verbindung stehender Teilstrukturen.

Des Weiteren ist es möglich, dass einem Objekt eine sozusagen überlagerte oder grundsätzliche abstrakte syntaktische Struktur eines Softwaremoduls zugeordnet ist, die mehrere, beispielsweise mindestens zwei, untergeordnete oder unterlagerte abstrakte syntaktische Strukturen oder Teilstrukturen umfasst. Die übergeordnete oder grundsätzliche abstrakte syntaktische Struktur ist beispielsweise ein Hauptprogramm, welches auf Unterprogramme oder Unterfunktionen verweist oder diese aufruft, wobei die Unterprogramme oder Unterfunktionen dann jeweils vorteilhaft weitere abstrakte syntaktische Strukturen darstellen oder als solche in der Datenbank gespeichert sind.

Ferner können einem Objekt mehrere Softwaremodule oder abstrakte syntaktische Strukturen oder deren Teilstrukturen von Softwaremodulen zugeordnet sein. Die Softwaremodule oder abstrakten syntaktischen Strukturen oder deren Teilstrukturen können miteinander verbunden sein oder auch ohne Verbindung untereinander sein.

Unter einer Verbindung wird z.B. eine logische Verbindung oder logische Verknüpfung, eine Datenbank-Relation, ein Verweis, ein Zeiger oder dergleichen verstanden.

Die abstrakte syntaktische Struktur kann beispielsweise eine Baumform aufweisen. Dabei können beispielsweise Teilstrukturen baumartige miteinander verknüpft sein. Eine Teilstruktur kann eine andere Teilstruktur umfassen. Abstrakt bedeutet in diesem Sinne, dass nicht jedes Detail der wirklichen Syntax gespeichert ist oder wird, sondern dass die strukturellen, inhaltsspezifischen Details Gegenstand der syntaktischen Struktur sind. Beispielsweise kann eine Bedingung als Knoten, der in zwei oder mehrere Zweige verzweigt, syntaktisch dargestellt sein.

Das Verfahren und/oder die Vorrichtung und/oder das Computerprogrammprodukt gemäß der Erfindung umfasst beispielsweise einen sogenannten Parser oder zu Deutsch Zerteiler, der den logischen Aufbau des erfassten oder eingelesenen Quellcodes analysiert.

Es ist ein Grundgedanke der vorliegenden Erfindung, dass nicht oder nicht nur der Quellcode eines Softwaremoduls in der Datenbank abgelegt wird, der gegebenenfalls ungeprüft und nicht kompilierbar ist, sondern dass anhand des Quellcodes eine abstrahierte oder abstrakte syntaktische Struktur syntaktische Struktur gebildet wird, d. h. dass bereits eine syntaktisch konsistente abstrakte Struktur in der Datenbank abgelegt wird und eine oder mehrere logische Verbindungen zwischen dem Objekt, dem das Softwaremoduls zugeordnet ist, und der abstrakten syntaktischen Struktur hergestellt ist. Der Quellcode enthält syntaktische Abhängigkeiten zwischen seinen einzelnen Bestandteilen, die in der abstrakten syntaktischen Struktur in der Datenbank repräsentiert sind.

Ausgehend von der mindestens einen gespeicherten abstrakten syntaktischen Struktur, also unmittelbar anhand derselben, kann beispielsweise Programmcode erzeugt werden, der durch einen Prozessor ausführbar ist. Der Programmcode enthält also beispielsweise sogenannte Maschinenbefehle. Es ist aber auch möglich, dass aus einer gespeicherten abstrakten Struktur zunächst Quellcode erzeugt wird, aus dem dann wiederum ein Compiler Programmcode erzeugt, der durch einen Prozessor ausführbar ist. Der Prozessor, der die Befehle des Programmcodes ausführen kann, ist beispielsweise ein Prozessor des Objekts, insbesondere ein Prozessor eines Steuergeräts. Wenn also beispielsweise eine abstrakte syntaktische Struktur eine Öffnungsfunktion eines Fensterhebers eines Kraftfahrzeugs realisiert, kann der Compiler anhand der abstrakten syntaktischen Struktur oder daraus generiertem Quellcode Programmcode erzeugen, der durch ein Steuergerät des Fensterhebers ausführbare Befehle enthält, um beispielsweise einen Antriebsmotor des Fensterhebers zum Öffnen eines Fensters anzusteuern.

Der Compiler kann einen Bestandteil der erfindungsgemäßen Vorrichtung oder des erfindungsgemäßen Computerprogrammprodukts darstellen.

Es ist aber auch möglich, dass die Vorrichtung den Quellcode an einer Ausgabeschnittstelle, beispielsweise an einem Speicherplatz oder einer Datenschnittstelle, zum Beispiel einer Netzwerk-Schnittstelle, bereitstellt und der Quellcode dann durch einen Compiler zu Programmcode verarbeitet wird, der durch den Prozessor des Objekts ausführbar ist. Der Compiler braucht bei diesem Szenario nicht Bestandteil der erfindungsgemäßen Vorrichtung oder des Computerprogrammprodukts sein oder unmittelbar in Verbindung mit der Vorrichtung oder dem Computerprogrammprodukt stehen.

Vorteilhaft sieht also das Verfahren vor:
Erzeugen von Programmcode mit durch einen Prozessor ausführbaren Befehlen unmittelbar aus der gespeicherten abstrakten syntaktischen Struktur oder anhand von aus der gespeicherten abstrakten syntaktischen Struktur in einer Programmiersprache erzeugtem Quellcode und/oder Bereitstellung eines Quellcodes zur Erzeugung von Programmcode mit durch einen Prozessor ausführbaren Befehlen anhand der abstrakten syntaktischen Struktur des Softwaremoduls.

Erfindungsgemäß ist bei dem Verfahren vorgesehen:
Erzeugen von bearbeitbarem Quellcode in einer Programmiersprache des in der Datenbank gespeicherten Softwaremoduls oder eines Teils davon anhand der mindestens einen dem Softwaremodul zugeordneten abstrakten syntaktischen Struktur,
- Bereitstellen des Quellcodes zur Bearbeitung durch einen Bediener für die Bedienschnittstelle oder an der Bedienschnittstelle,
- Erfassen des durch den Bediener bearbeiteten Quellcodes und Erzeugung einer überarbeiteten abstrakten syntaktischen Struktur des Softwaremoduls durch syntaktisches Analysieren des bearbeiteten Quellcodes, und
- Speichern der überarbeiteten abstrakten syntaktischen Struktur in der Datenbank unter Beibehaltung und/oder Aktualisierung der mindestens einen logischen Verbindung zwischen der vor der Bearbeitung des Quellcodes gespeicherten abstrakten syntaktischen Struktur oder eines Teils davon, insbesondere einer abstrakten syntaktischen Teilstruktur, oder eines Teils davon und dem Objekt.

Die erfindungsgemäße Vorrichtung oder das Computerprogrammprodukt arbeiten vorteilhaft sinngemäß und/oder haben zur Ausführung dieser Schritte ausgestaltete Mittel. Die Vorrichtung, das Computerprogrammprodukt und das Verfahren sehen also dementsprechend vor, dass anhand der mindestens einen mit dem Objekt logisch verbundenen abstrakten syntaktischen Struktur Quellcode bereitgestellt wird, der von einem Bediener bearbeitbar ist. Z.B. haben das Computerprogrammprodukt oder die Vorrichtung einen Quellcodegenerator.

Beispielsweise steht der Quellcode an einem Editor bereit, sodass der Bediener Befehle in der Programmiersprache, in der der Quellcode geschrieben ist, ändern, löschen oder einfügen kann. Sodann wird der bearbeitete Quellcode wieder erfasst, syntaktisch analysiert, um auf diesem Wege eine neue Version der abstrakten syntaktischen Struktur zu erstellen. Dann jedoch wird diese überarbeitete abstrakte syntaktische Struktur oder neue Version der abstrakten syntaktischen Struktur in Relation mit dem Objekt gebracht oder gehalten, d. h. dass unter Beibehaltung und/oder Aktualisierung der mindestens einen oder den mehreren logischen Verbindungen zwischen dem Objekt und der ursprünglichen oder vorherigen syntaktischen Struktur die überarbeitete Version der abstrakten syntaktischen Struktur in der Datenbank abgelegt wird. Somit bleibt also die mindestens eine logische Verbindung zwischen dem Objekt und dem ihm zugeordneten Softwaremoduls in Gestalt der abstrakten syntaktischen Struktur auch dann erhalten, wenn diese an beispielsweise einem Editor überarbeitet wird. Zugleich wird auch die neue oder überarbeitete Version der abstrakten syntaktischen Struktur nicht einfach in der Datenbank abgelegt, sondern zuvor syntaktisch analysiert, sodass aus der neuen abstrakten syntaktischen Struktur durch einen Prozessor des Objekts, dem die Struktur zugeordnet ist, ausführbarer Programmcode erzeugbar ist.

Beispielsweise kann die logische Verbindung zwischen der abstrakten syntaktischen Struktur oder deren Teilstruktur und dem Objekt als Ganzes beibehalten werden. Es ist aber auch möglich, dass die logische Verbindung zwischen Objekt und syntaktischer Struktur oder deren Teilstruktur aktualisiert oder gepflegt wird. Wenn also beispielsweise eine logische Verbindung zwischen einer Teilstruktur der abstrakten syntaktischen Struktur und dem Objekt besteht und sich die Position oder Relation der Teilstruktur innerhalb der abstrakten syntaktischen Struktur verändert, wird die Verbindung zwischen der Teilstruktur und dem Objekt aktualisiert, d. h. zwischen dem neuen Ort der Teilstruktur und dem Objekt hergestellt.

Nun wäre es prinzipiell möglich, dass in der Datenbank nur die neue abstrakte syntaktische Struktur oder die neue Version der abstrakten syntaktischen Struktur gespeichert ist oder wird. Ein vorteilhaftes Konzept sieht jedoch vor, dass mehrere Versionen, beispielweise mindestens zwei Versionen, der abstrakten syntaktischen Struktur gespeichert werden. Vorteilhaft sieht das Verfahren also ein Speichern mindestens zweier Versionen der abstrakten syntaktischen Struktur des Softwaremoduls unter Beibehaltung und/oder Aktualisierung der mindestens einen logischen Verbindung vor. Die logische Verbindung zwischen den Versionen der abstrakten syntaktischen Struktur und dem Objekt bleiben also erhalten oder werden aktualisiert, verweisen also beispielsweise an einen anderen Ort innerhalb der überarbeiteten abstrakten syntaktischen Struktur.

Vorteilhaft ist ein Speichern der mindestens zwei Varianten oder Versionen der abstrakten syntaktischen Struktur in Gestalt vollständiger abstrakter syntaktischer Strukturen und/oder in Gestalt einer vollständigen abstrakten syntaktischen Struktur und Unterschieden zwischen dieser vollständigen abstrakten syntaktischen Struktur und der jeweils anderen abstrakten syntaktischen Struktur vorgesehen. Beispielsweise kann eine ursprüngliche abstrakte Struktur oder Basisstruktur gespeichert werden und ausgehend davon inkrementell eine oder mehrere Änderungen davon. Somit können eine oder mehrere Versionen einer abstrakten syntaktischen Struktur ausgehend von einer Basis-Struktur anhand der inkrementellen Änderungen gebildet werden. Vorteilhaft ist es, wenn das erfindungsgemäße Programmmodul oder die Datenbank für jede Version eine Änderungsinformation speichert. Diese Änderungsinformation umfasst beispielsweise für jede Version eine Information und/oder welche Person eine Änderung durchgeführt hat und/oder eine Information über einen Änderungszeitpunkt und/oder wann die Änderung durchgeführt wurde und welche Änderung realisiert wurde. Auch eine dekrementelle Vorgehensweise ist möglich, d. h. die jeweils älteste oder aktuellste abstrakte syntaktische Struktur in der Datenbank abgelegt wird und zur Ermittlung oder Erzeugung von vor Versionen davon die jeweiligen Unterschiede dekrementell gespeichert werden. Die Versionierung ist dabei fein granular bis auf die Ebene der kleinsten syntaktische Teilstruktur möglich und damit steht die Änderungshistorie jeder syntaktischen Teilstruktur zur Verfügung. Auch die Objekte werden mit dem gleichen Mechanismus versioniert. Die Umbenennung einer syntaktischen Teilstruktur zum Beispiel einer Funktion ist nur eine Attributänderung. Damit entsteht auch eine neue Version der Funktion. Die Änderungshistorie der Funktion bleibt erhalten und kann von Bediener auch über den Zeitpunkt der Umbenennung hinweg eingesehen werden. Bei einer Abspeicherung des Quellcodes als reinem Text könnte demgegenüber eine Änderungshistorie einer solchen Funktion nicht mehr ermittelt werden.

Diese Versionierung umfasst vorteilhaft auch die logischen Verbindungen. Für jede logische Verbindung werden zweckmäßigerweise die zum Zeitpunkt der Erstellung vorhandenen Versionen der verbundenen Objekte und syntaktischen Teilstrukturen abgespeichert. Vorteilhaft wird auch für jede logische Verbindung gespeichert, der die logische Verbindung erstellt hat und/oder wann die logische Verbindung erstellt wurde. Somit ist in der Änderungshistorie eines Objekts oder einer syntaktischen Teilstruktur erkennbar, in welcher Version eine logische Verbindung erstellt oder auch gelöscht wurde.

Die Versionen einer jeweiligen abstrakten syntaktischen Struktur eignen sich beispielsweise dazu, Änderungen nachzuvollziehen oder beispielsweise jeweils geeigneten Programmcode zu entsprechenden Versionen des Objekts, dem die abstrakte syntaktische Struktur zugeordnet ist, zu erzeugen.

Vorteilhaft ist ein Erzeugen von Programmcode mit durch einen Prozessor ausführbaren Befehlen für eines der Objekte anhand einer ersten Variante oder einer zweiten Variante einer dem Objekt zugeordnete abstrakten syntaktischen Struktur oder eines Teils davon vorgesehen. Wenn also beispielsweise einer ersten Version oder Variante des Objekts die erste Variante und einer zweiten Version oder Variante des Objekts die zweite Variante der abstrakten syntaktischen Struktur zugeordnet ist, kann in Abhängigkeit der jeweiligen Variante des Objekts die jeweilige Variante der abstrakten syntaktischen Struktur zur Erzeugung geeigneten Programmcodes herangezogen werden. Das Objekt ist beispielsweise ein Steuergerät erster Generation und/oder eines bestimmten Herstellers und ein Steuergerät zweiter Generation und/oder eines anderen Herstellers, die unterschiedliche Hardware-Eigenschaften, beispielsweise unterschiedliche Prozessoren, unterschiedliche Ausgabeschnittstellen oder dergleichen aufweisen können. Die Wartung der Software gestaltet sich äußerst einfach, da nämlich nicht die Software als Ganzes oder das Softwaremodul als Ganzes neu zu erstellen ist, sondern nur diejenigen Teile der Software in Gestalt der zu dem Objekt oder Steuergerät passenden Version oder Variante der abstrakten syntaktischen Struktur herangezogen werden, die zur Erzeugung des durch den Prozessor des Objekts ausführbaren Programmcode notwendig oder geeignet sind. Es ist dabei möglich, fein granular von einer syntaktischen Teilstruktur Versionen oder Varianten zu bilden. Von Objekten können in gleicher Weise Versionen oder Varianten erstellt werden. Alle zu einer Version oder Variante gehörenden syntaktischen Teilstrukturen werden vorteilhaft zu einer Variantenmenge zusammengefasst. Vor der Erzeugung des Programmcodes wird dann entweder die Variantenmenge oder die Variante des dazugehörigen Objekts ausgewählt um die entsprechende Variante des Programmcodes zu generieren.

An sich reicht es aus, die jeweilige abstrakte syntaktische Struktur in der Datenbank zu speichern, da jederzeit aus dieser Struktur Quellcode zur Bearbeitung durch einen Bediener oder zum Kompilieren durch einen Compiler erzeugbar ist. Es kann aber ein Speichern von durch den Bediener erstelltem Quellcode zusätzlich zu der aus dem Quellcode erstellten abstrakten syntaktischen Struktur in der Datenbank vorgesehen sein. Dadurch ist es beispielsweise möglich, dass dem Bediener beispielsweise dieser von ihm selbst erstellte Quellcode, der in der Datenbank gespeichert ist, sowie ein Quellcode, der von der erfindungsgemäßen Vorrichtung anhand der abstrakten syntaktischen Struktur erzeugt wird, an einem Editor oder einer sonstigen Bedienschnittstelle bereitgestellt werden. Der vom Bediener erstellte und gespeicherte Quellcode kann aber auch beispielsweise für ein Fehlermanagement und/oder zu Dokumentationszwecken in der Datenbank gespeichert werden.

Für eine effiziente und schnelle Erzeugung von Software ist es häufig notwendig, dass mehrere Programmierer simultan Software für ein Projekt erstellen und/oder bearbeiten. So wird beispielsweise Software für ein Steuergerät eines Kraftfahrzeugs gleichzeitig von mehreren Programmierern erzeugt, wobei es notwendig ist, dass die Software konsistent bleibt, also beispielsweise zueinander passende Teile erzeugt werden.

Nun ist es grundsätzlich möglich, dass beispielsweise ausgehend von einem Objekt die gesamte dem Objekt zugeordnete Software gesperrt wird, wenn ein Teil der Software durch einen Programmierer oder Bediener bearbeitet wird. Dadurch ist aber eine parallele Bearbeitung und Überarbeitung der Software nicht möglich. Eine Möglichkeit kann nun vorsehen, dass mehrere Bediener oder mindestens zwei Bediener gleichzeitig an Quellcode arbeiten, aus dem eine einzige abstrakte syntaktische Struktur zu generieren ist. Durch einen Abgleich des Quellcodes, beispielsweise anhand einer Vergleichsoperation vor der Erzeugung der abstrakten syntaktischen Struktur, können syntaktische Problemstellungen, die sich durch die parallele Bearbeitung des Quellcodes ergeben haben, ermittelt und/oder eliminiert werden.

Bevorzugt ist es jedoch, wenn durch eine geeignete Sperrfunktion Software-Inkonsistenzen von vornherein verhindert werden. Bevorzugt ist ein Sperren eines verändernden Zugriffs auf die abstrakte syntaktische Struktur des Softwaremoduls als Ganzes oder des zur Bearbeitung durch den Bediener an der Bedienschnittstelle bereitgestellten Teils davon während der Bereitstellung des aus der syntaktischen Struktur oder des Teils davon erzeugten Quellcodes zur Bearbeitung durch einen Bediener vorgesehen. Dadurch werden vorzugsweise Konflikte beim Bearbeiten durch zwei oder mehr Bediener und Syntaxfehler in der Datenbank zu verhindert. Der Grundgedanke ist dabei, dass die abstrakte syntaktische Struktur insgesamt, vorzugsweise aber nur Teile davon, zur exklusiven Bearbeitung des daraus generierten Quellcodes durch jeweils einen einzigen Bediener oder Programmierer temporär gesperrt werden, wobei aber andere abstrakte syntaktische Strukturen oder Teile der vorgenannten abstrakten Struktur zur Bearbeitung durch einen oder mehrere andere Bediener zugänglich bleiben. So kann beispielsweise eine Teilstruktur der abstrakten syntaktischen Struktur für einen Bediener und eine andere Teilstruktur der abstrakten syntaktischen Struktur für einen anderen Bediener jeweils exklusiv bereitgestellt werden, d. h. der jeweiligen Teilstruktur entsprechender Quellcode für den jeweiligen Bediener bereitgestellt wird. Diese Sperren sind vorteilhaft fein granular für einzelne bis zur kleinsten syntaktische Teilstruktur möglich. Damit wird das parallele Bearbeiten innerhalb einer syntaktischen Teilstruktur durch mehrere Bediener unterstützt, also zum Beispiel innerhalb einer Funktion. Jeder Sperre enthält die Information, von welcher Person und wann die Sperre gesetzt oder akquiriert wurde.

Es werden vorteilhaft zwei verschiedene Sperrarten verwendet: eine exklusive Sperre, die nur ein Bediener besitzen kann und eine geteilte Sperre, die mehrere Bediener besitzen können oder die eine Bearbeitung durch eine Gruppe von Bedienern erlaubt. Damit wird eine sehr hohe Parallelität bei der Bearbeitung der abstrakten syntaktischen Strukturen ermöglicht. Die erfindungsgemäße Vorrichtung oder das erfindungsgemäße Computerprogrammprodukt ermittelt zweckmäßigerweise in Abhängigkeit von einem Bearbeiten und/oder Anlegen und/oder Löschen einer abstrakten syntaktischen Teilstruktur durch einen Bediener, insbesondere automatisch, die notwendigen Sperren, so dass es zu keinen Konflikten in der parallelen Bearbeitung kommen kann. Damit ist auch sichergestellt, dass es zu keinen Syntaxfehlern im Zusammenhang mit abhängigen abstrakten syntaktischen Strukturen nach der Abspeicherung der geänderten Struktur in der Datenbank kommen kann. Die abstrakten syntaktischen Strukturen in der Datenbank sind daher immer kompilierbar und nach jedem Abspeichern von geänderten abstrakten syntaktischen Strukturen in der Datenbank können die Softwaremodule kompiliert, ausgeführt und damit über automatische Tests getestet werden. Das automatische Sperren der notwendigen abstrakten syntaktischen Teilstruktur ist vorteilhaft in die Bedienschnittstelle also in den Editor integriert und erfordert daher keine weitere Interaktion des Bedieners.

Die mindestens eine Verbindung zwischen dem Objekt und der abstrakten syntaktischen Struktur oder Teilstruktur des Softwaremoduls ist vorzugsweise eine bidirektionale Verbindung oder Relation, sodass ausgehend von dem Objekt die abstrakte syntaktische Struktur oder Teilstruktur unmittelbar ohne Rechenaufwand ermittelbar und/oder bestimmbar ist oder auch umgekehrt das Objekt ausgehend von der abstrakten syntaktischen Struktur oder Teilstruktur unmittelbar ohne Rechenaufwand ermittelbar und/oder bestimmbar ist. An einer Bedienschnittstelle oder der erwähnten Bedienschnittstelle kann also beispielsweise ausgehend vom Objekt nachvollzogen werden, welche abstrakte syntaktische Struktur oder welche abstrakten syntaktischen Strukturen dem Objekt zugeordnet ist oder sind. Somit ist beispielsweise ermittelbar, welche abstrakten syntaktischen Strukturen bei einer Veränderung des Objekts anzupassen sind, beispielsweise indem auf Basis der jeweiligen syntaktischen Struktur des geänderten Objekts Quellcode erzeugt und durch einen Bediener bearbeitet wird, um durch die Veränderung des Objekts notwendige Anpassungen des Softwaremoduls zu realisieren. In umgekehrter Richtung lässt sich bei einer Veränderung eines Softwaremoduls nachvollziehen, welche Objekte und/oder andere Softwaremoduls davon betroffen sind. Somit können dadurch beispielsweise notwendig werdende Anpassungen auch an den Objekten oder anderen Softwaremodulen durchgeführt werden.

Bereits erwähnt wurde, dass eine abstrakte syntaktische Struktur mehrere, beispielsweise mindestens zwei, abstrakte syntaktische Teilstrukturen umfassen kann. Ein bevorzugtes Konzept sieht vor, dass zwischen einem Objekt, beispielsweise einem Steuergerät, und einer abstrakten syntaktischen Struktur nicht nur eine einzige Verbindung in der Datenbank besteht, sondern dass mehrere Verbindungen vorhanden sind. Ein bevorzugtes Konzept sieht beispielsweise vor: Herstellung einer ersten logischen Verbindung zwischen einem ersten Teil der abstrakten syntaktischen Struktur des Softwaremoduls und dem Objekt, dem das Softwaremodul zugeordnet ist, und mindestens einer zweiten logischen Verbindung zwischen mindestens einem zweiten Teil der abstrakten syntaktischen Struktur des Softwaremoduls und dem Objekt, dem das Softwaremodul zugeordnet ist. Wenn also beispielsweise ein Teil der abstrakten syntaktischen Struktur geändert wird, kann dieser Teil durch einen Bediener anhand des aus dem Teil der syntaktischen Struktur erzeugtem Quellcode bearbeitet werden, der nach syntaktische Überprüfung zu einem neuen Teil oder einer neuen Version des bearbeiteten Teils der abstrakten syntaktischen Struktur in der Datenbank gespeichert wird, jedoch unter Beibehaltung der logischen Verbindung zwischen dem Objekt und dem neuen oder überarbeiteten Teil der syntaktischen Struktur.

Eine vorteilhafte Maßnahme sieht eine Kennzeichnung einer abstrakten syntaktischen Struktur oder eines Teils davon mit einer eindeutigen Kennung vor. Die eindeutige Kennung kann beispielsweise zur Herstellung einer Verbindung zwischen Objekt und abstrakte syntaktische Struktur dienen. Selbstverständlich können innerhalb der abstrakten syntaktischen Struktur Teilstrukturen oder Teile vorgesehen sein, die ebenfalls mit jeweils einer eindeutigen Kennung versehen sind.

Die Objekte innerhalb der Datenbank können vielfältiger Natur sein. Bevorzugt ist beispielsweise vorgesehen, dass die Objekte in der Datenbank Steuergeräten eines Kraftfahrzeugs und/oder Testdaten und/oder Testfunktionen zum Überprüfen des Objekts, insbesondere eines Steuergeräts eines Kraftfahrzeugs, und/oder funktionale Anforderungen an ein Objekt, insbesondere ein Steuergeräten eines Kraftfahrzeugs, und/oder Dokumentation, insbesondere Fehlerdokumentation, eines Objekts, insbesondere eines Steuergeräts eines Kraftfahrzeugs, umfassen oder dadurch gebildet sind. Mithin ist also ein Objekt innerhalb der Datenbank nicht unbedingt sozusagen nur ein Steuergerät, sondern kann auch ein sozusagen weiches Objekt sein, nämlich beispielsweise eine Dokumentation von Fehlern, Eigenschaften oder dergleichen darstellen. Auch ein Prüfprogramm, mit dem ein Objekt in Gestalt eines Steuergeräts prüfbar ist, kann ein separates Objekt innerhalb der Datenbank darstellen oder sein. Allerdings muss nicht jedem Objekt der Datenbank eine Software oder ein Softwaremodul zugeordnet sein. Vielmehr ist es beispielsweise möglich, dass nur einzelnen Objekten der Datenbank eine Software oder mindestens ein Softwaremodul zugeordnet ist, beispielsweise nur den Objekten für Steuergeräte und Kommunikationsgeräte, während andere Objekte, zum Beispiel ein Kabelbaum, ohne zugeordnete Software in der Datenbank gespeichert sind. Einem Objekt in Gestalt beispielsweise eines Steuergeräts können mehrere andere Objekte und/oder Softwaremodule zugeordnet sein, d. h. entsprechende Verbindungen zwischen dem Steuergerät-Objekt und den anderen Objekten oder Softwaremodulen bestehen.

Für die Objekte der Datenbank sind vorzugsweise Vorlagen in der Datenbank gespeichert und/oder speicherbar. Bevorzugt ist ein Erzeugen von Objekten in der Datenbank durch Zuordnung von Attributen zu einem jeweiligen Objekt vorgesehen. Beispielsweise kann einem Objekt für ein Steuergerät als Attribut der Name, eine Beschreibung oder die Größe zugeordnet sein und dergleichen mehr. Abstrakten syntaktischen Strukturen oder Teilstrukturen können in gleicher Weise Attribute zugeordnet werden. Dies ist beispielsweise bei der Ablage von Quellcode als Text nicht möglich. Welche Attribute zusätzlich vorhanden sind, kann über eine eigene Konfiguration definiert werden. Denkbar wäre zum Beispiel ein Attribut für den Lebenszyklus der abstrakten syntaktischen Teilstruktur mit verschiedenen Zuständen wie zum Beispiel neu, überprüft, freigegeben.

Des Weiteren ermöglicht die Datenbank vorzugsweise eine Herstellung einer logischen Verbindung zwischen mindestens zwei, vorzugsweise mehreren, Objekten in der Datenbank. Ein Bediener kann beispielsweise an einer Eingabeschnittstelle anhand von Eingabebefehlen die zu verknüpfenden Objekte auswählen und logisch miteinander verknüpfen, zum Beispiel durch Eingaben von Adressen, durch eine Bedienhandlung mit einer Maus oder dergleichen. Die erfindungsgemäße Vorrichtung oder das erfindungsgemäße Computerprogrammprodukt unterstützt auch das automatische Erzeugen von logischen Verbindungen. So kann die erfindungsgemäße Vorrichtung oder das Computerprogrammprodukt zum Beispiel alle geänderten abstrakten syntaktischen Teilstrukturen automatisch und/oder ohne Zutun eines Bedieners mit dem Objekt, das die technische Anforderung repräsentiert, verbunden werden. Die technische Anforderung ist dabei die Ursache für die Änderung an der abstrakten syntaktischen Struktur durch den Bediener.

Es ist möglich, dass der Quellcode, der zur Erzeugung der abstrahierten syntaktischen Struktur syntaktisch analysiert wird, und ein Quellcode, der anschließend zur Erzeugung von Programmcode, der durch einen Prozessor des Objekts ausführbar ist, in derselben Programmiersprache, beispielsweise C, C++ oder dergleichen verfasst sind. Hinsichtlich Programmiersprachen ermöglicht die Erfindung aber eine hohe Flexibilität. Es kann zum Beispiel eine Erzeugung einer abstrakten syntaktischen Struktur anhand von in einer ersten Programmiersprache erstelltem Quellcode und Bereitstellung von Quellcode in einer zweiten Programmiersprache anhand der abstrakten syntaktischen Struktur vorgesehen sein. So kann der Bediener beispielsweise den ursprünglichen Quellcode zunächst in C verfassen. Anhand dieses Quellcodes wird eine abstrakte syntaktische Struktur erzeugt, die als Basis für Quellcode dient, der in einer anderen Programmiersprache, beispielsweise Java, C++ oder dergleichen, zur Weiterverarbeitung durch einen Compiler und somit zur Erzeugung des durch den Prozessor des Objekts ausführbaren Programmcodes erzeugt wird. Der sozusagen gemeinsame Nenner der ersten und zweiten Programmiersprache ist die abstrakte syntaktische Struktur.

Die Bedienschnittstelle kann eine abstrakte syntaktische Struktur oder Teilstruktur in unterschiedlichen Darstellungen für den Bediener bereitstellen. So kann ein Editor der Bedienschnittstelle beispielsweise aus verschiedenen abstrakten syntaktischen Strukturen thematisch zusammengehörige Teilstrukturen als Quelltext zusammenfassen. Die thematische Zusammengehörigkeit kann über ein zusätzliches Attribut an den abstrakten syntaktischen Teilstrukturen zum Ausdruck gebracht werden. Die abstrakten syntaktischen Strukturen können dem Bediener als Quelltext, als Baum oder als UML Diagramm (UML = Unified Modeling Language oder vereinheitlichte Modellierungssprache) in der Bedienoberfläche präsentiert werden.

Nachfolgend werden Ausführungsbeispiele der Erfindung anhand der Zeichnung erläutert. Es zeigen:

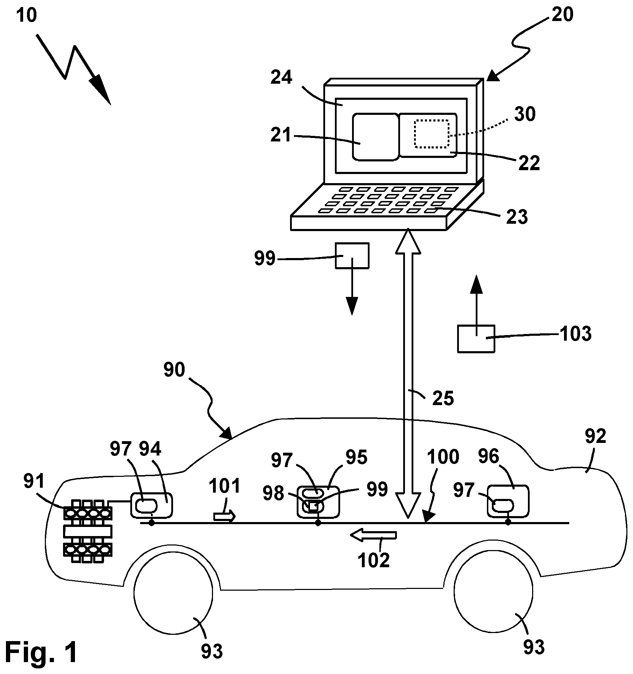

- Figur 1: eine schematische Darstellung eines Kraftfahrzeugs einschließlich mehrerer Steuergeräte sowie einer Entwicklungsumgebung zur Erzeugung von Software für das Kraftfahrzeug,
- Figur 2: eine schematische Darstellung der Erzeugung von Software gemäß Stand der Technik,
- Figur 3: eine schematische Darstellung einer Datenbank, und

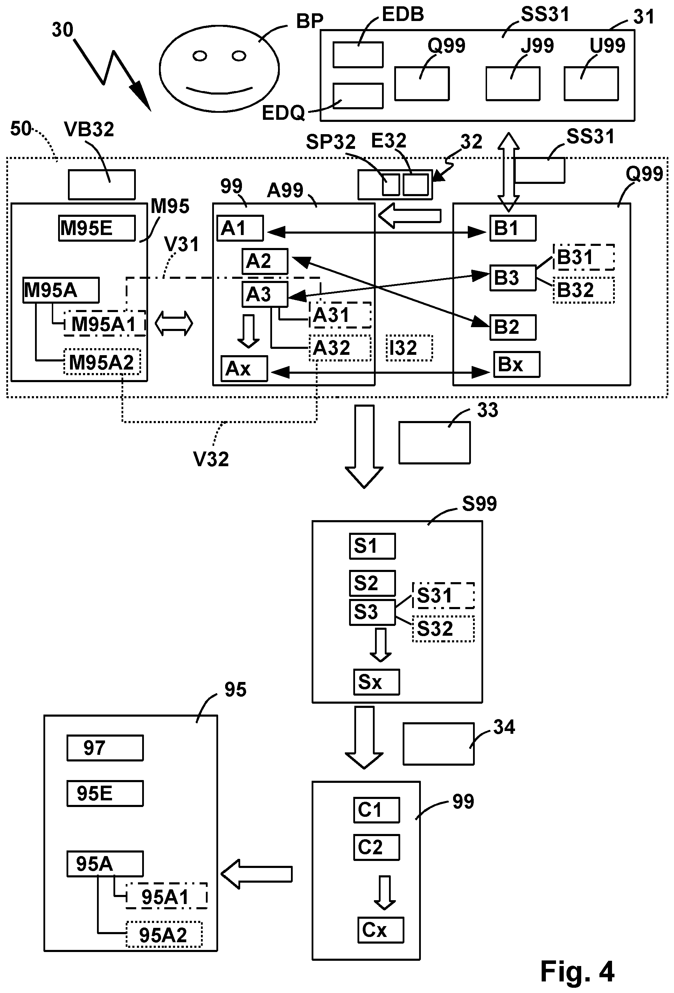

- Figur 4: eine schematische Darstellung der Ausführung des erfindungsgemäßen Verfahrens.

Ein Kraftfahrzeug 90, beispielsweise ein Personenkraftwagen, Lastkraftwagen oder dergleichen, umfasst einen Antriebsmotor 91, beispielsweise einen Verbrennungsmotor, Elektromotor oder dergleichen, der in einer Karosserie 92 angeordnet ist und Räder 93 des Kraftfahrzeugs 90 antreibt.

Zur Steuerung und/oder Überwachung des Kraftfahrzeugs 90 sind schematisch Steuergeräte 94, 95, 96, beispielsweise sogenannte ECUs (electronic control unit), dargestellt, die über einen Bus 100, beispielsweise einen CAN-Bus (CAN = Controller-Area-Network), miteinander kommunizieren können. Jedes Steuergerät 94, 95, 96 weist einen Prozessor 97 auf sowie Speicher zur Speicherung von Programmcode, der durch den Prozessor 97 ausführbar ist. Beispielhaft ist beim Steuergerät 95 ein Speicher 98 mit einem Softwaremodul oder Programmmodul 99 dargestellt. Die Steuergeräte 94, 95, 96 kommunizieren beispielsweise anhand von Bus-Nachrichten 101, 102 sowie weiteren, hier nicht dargestellten Bus-Nachrichten miteinander auf dem Bus 100.

Über eine Verbindung 25 sind eine Vorrichtung 20, die einen Bestandteil einer Entwicklungsumgebung zur Entwicklung von Software für das Kraftfahrzeug 90 bildet und beispielsweise einen Computer umfasst oder dadurch gebildet ist, und das Kraftfahrzeug 90 miteinander verbunden. Bei der Verbindung 25 handelt es sich beispielsweise um eine CAN-Verbindung, WLAN-Verbindung, USB-Verbindung oder dergleichen, über die die Vorrichtung 20 Daten, beispielsweise das Softwaremodul 99, zu den Steuergeräten 94, 95, 96 senden kann und vorzugsweise auch Daten von den Steuergeräten 94, 95, 96 empfangen kann, zum Beispiel eine Fehlernachricht 103.

Die Vorrichtung 20 umfasst einen Prozessor 21 zur Ausführung von Programmcode von Programmen, die in einem Speicher 22 gespeichert sind. Beispielsweise kann der Prozessor 21 Programmcode des nachfolgend erläuterten Programmmoduls 30 ausführen. Die Vorrichtung 20 umfasst weiterhin eine Eingabeschnittstelle 23, die beispielsweise Maus, Tastatur oder dergleichen andere Eingabemittel umfasst, sowie Ausgabemittel 24, zum Beispiel ein Display, Lautsprecher und dergleichen. Ein Bediener BP kann an der Vorrichtung 20 Software für das Kraftfahrzeug 90 entwickeln, beispielsweise das Softwaremodul 99.

Wenn die Vorrichtung 20 mit dem Kraftfahrzeug 90 gekoppelt ist, ergibt sich dadurch ein System 10.

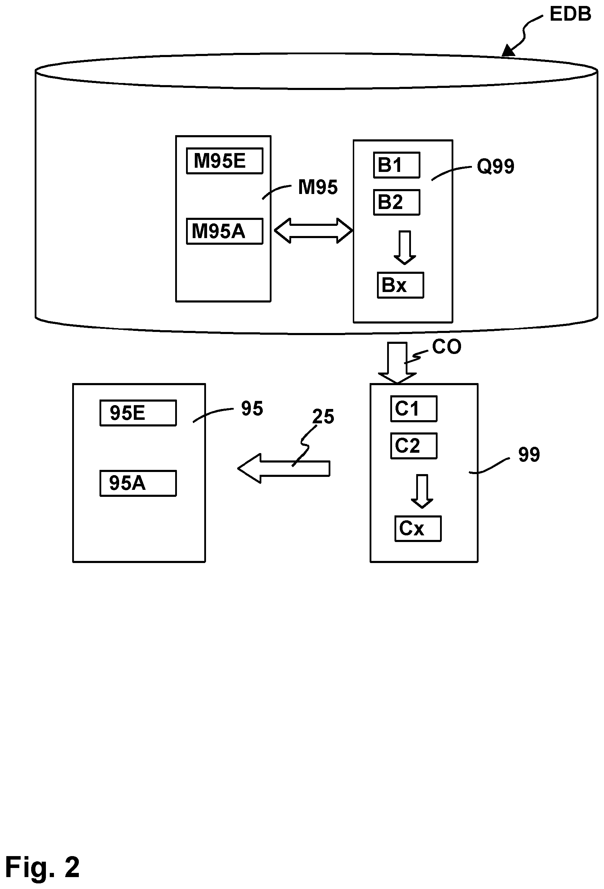

Figur 2 dient zur Veranschaulichung der hierfür bisher praktizierten Vorgehensweise. Beispielsweise ist in einer Datenbank EDB ein Objekt M95 als Repräsentanz oder Abbildung des Steuergeräts 95 gespeichert.

Das Steuergerät 95 weist eine Eingabeschnittstelle 95E und eine Ausgabeschnittstelle 95A, beispielsweise analoge und/oder digitale Eingänge und Ausgänge, auf. Beispielsweise kann über die Ausgabeschnittstellen 95A ein Antriebsmotor für einen Fensterheber angesteuert werden. Anhand von Sensoren ist eine jeweilige Position des Antriebsmotors oder des dadurch angetriebenen Fensters erfassbar, wobei die Sensoren über die Eingabeschnittstelle 95E mit dem Steuergerät 95 kommunizieren können. Für die Eingabeschnittstelle 95E und die Ausgabeschnittstelle 98A sind beispielsweise Attribute M95E und M95A des Objekts M95 in der Datenbank EDB gespeichert.

In Relation zu dem Steuergerät 95 ist in der Datenbank EDB Quellcode Q99 für das Softwaremodul 99 gespeichert, der beispielsweise Programmbefehle B1, B2, BX enthält, die in einer Programmiersprache, zum Beispiel C, formuliert sind. Der Quellcode Q99 ist durch einen Compiler CO kompilierbar und enthält dann Befehle C1, C2, CX, etc., die vom Prozessor 97 des Steuergeräts 95 ausführbar sind. Über die Verbindung 25 kann die Vorrichtung 20 das Softwaremodul 99 an das Steuergerät 95 senden, sodass dieses die entsprechende Fensterheber-Steuerung leisten kann.

Wenn sich Änderungen ergeben, wird der Quellcode Q99 überarbeitet und erneut kompiliert, um ein überarbeitetes Softwaremodul 99 zu erzeugen. Die Handhabbarkeit eines derartigen Systems ist jedoch eingeschränkt. Wenn der Quellcode Q98 nicht unmittelbar kompiliert wird, sondern zunächst in der Datenbank EDB ohne Kompilierung abgelegt wird, können Fehler enthalten sein, die bis zum späteren Kompilieren gar nicht erst auffallen. Die Handhabung eines bekannten Systems ist also nicht in allen Fällen günstig.

Das Programmmodul 30, welches die Datenbank 50 enthält oder mit dieser kommuniziert, ermöglicht eine bequeme Handhabung:
Zur Bedienung des Programmmoduls 30 dient eine Bedienschnittstelle 31, zum Beispiel ein Editor EDB für die Datenbank 50 oder Teile davon, ein Editor EDQ für Quellcode und dergleichen mehr. Die Bedienschnittstelle 31 umfasst beispielsweise eine grafische Bedienoberfläche, die anhand der Eingabeschnittstelle 23 und der Ausgabemittel 24 realisiert ist.

An der Bedienschnittstelle 31 kann der Bediener BP beispielsweise Quellcode Q 99 für das Softwaremodul 99 erzeugen, beispielsweise in an sich bekannter Weise in einer Programmiersprache formulieren. Der Quellcode Q enthält beispielsweise Funktionsbestandteile B1, B3, B2, BX, beispielsweise Funktionen des Softwaremoduls 99, einzelne If- Bedingungen, Schleifen und dergleichen. Bei den Funktionsbestandteilen B1, B2, B3 etc. kann es sich aber auch um Unterprogramme oder aufrufbare Funktionen handeln.

Eine Option kann vorsehen, dass der Quellcode Q99 in der Datenbank 50 abgelegt wird, was in der Zeichnung schematisch angedeutet ist.

Wesentlich ist jedoch, dass der Quellcode Q99 durch einen Syntaxstrukturgenerator 32 syntaktisch analysiert wird und in Gestalt einer abstrakten syntaktischen Struktur A99 in der Datenbank 50 gespeichert wird. Die Datenbank 50 ist beispielsweise in dem Speicher 22 gespeichert. Der Syntaxstrukturgenerator 32 bildet und/oder umfasst ein Erzeugungsmittel E32 zur Erzeugung einer abstrakten syntaktischen Struktur und bildet und/oder umfasst ein Speichermittel SP32 zum Speichern der abstrakten syntaktischen Struktur, z.B. der abstrakten syntaktischen Struktur A99, in der Datenbank 50.

Die abstrakte syntaktische Struktur A99 enthält beispielsweise für jeden Funktionsbestandteil B1, B3, B2, BX eine abstrakte Teilstruktur A1, A3, A2, AX und gegebenenfalls weitere, in der Zeichnung nicht dargestellte Teilstrukturen. Diese Teilstrukturen A1, A3, A2, AX kann man auch als fein granulare abstrakte syntaktische Teilstrukturen bezeichnen, die jeweils einen Teil der gesamten syntaktischen Struktur A99 repräsentieren. Die Teilstrukturen A1, A3, A2, AX können miteinander verknüpft sein oder auch unverknüpft sein. Beispielsweise sind die Teilstrukturen A1, A3, A2 in der Art eines Baumes mit Verzweigungen miteinander verknüpft.

Der Syntaxstrukturgenerator 32 analysiert den Quellcode Q99 derart, dass seine syntaktische Konsistenz überprüft wird. Wenn also beispielsweise eine in dem Quellcode Q99 programmierte Schleife nicht geschlossen ist, gibt der Syntaxstrukturgenerator 32 an der Bedienschnittstelle 31 eine Fehlermeldung aus und erlaubt es dem Bediener BP, den Fehler zu eliminieren.

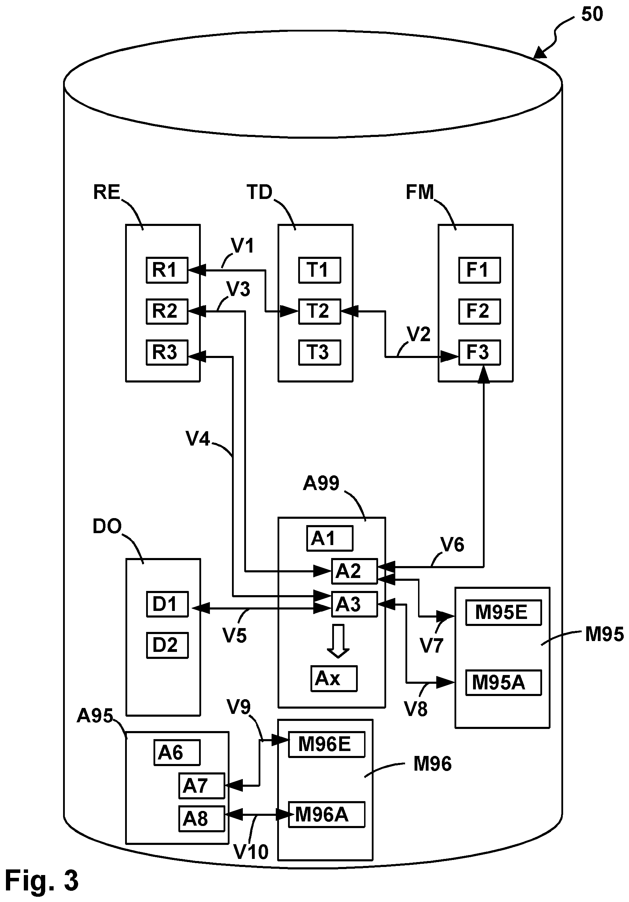

In der Datenbank 50 ist die abstrakte syntaktische Struktur A99 dann dem Modell oder Objekt M95 des Steuergeräts 95 zugeordnet, wobei über diese Zuordnungen noch im Zusammenhang mit Figur 3 näheres erläutert wird.

Die abstrakte syntaktische Struktur A99 repräsentiert das Softwaremodul 99 und eignet sich zur unmittelbaren Herstellung desselben anhand eines Compilers 34, gegebenenfalls unter Nutzung eines dem Compiler 34 vorgeschalteten Quellcodegenerator 33.

Eine Variante kann beispielsweise vorsehen, dass Compiler 34 unmittelbar anhand der abstrakten syntaktischen Struktur A99 das Softwaremodul 99 erzeugt.

Der Quellcodegenerator 33 erzeugt anhand der abstrakten syntaktischen Struktur A99 Quellcode S99, der beispielsweise Funktionen und/oder Befehle S1, S2, S3 ... SX enthält, anhand derer der Compiler 34 ein durch den Prozessor 97 des Steuergeräts 95 ausführbaren Programmcode erzeugt. Dieser Programmcode enthält beispielsweise die bereits erläuterten Befehle C1, C2, CX etc..

Der Quellcodegenerator 33 kann zudem anhand der abstrakten syntaktischen Struktur A99 wieder Quellcode erzeugen, die das Programmmodul 30 an der Bedienschnittstelle 31 bereitstellt, so dass der Quellcode vom Bediener 31 bearbeitbar ist, beispielsweise zur Erzeugung unterschiedlicher Varianten einer Software, zur Behebung von Fehlern und dergleichen. So kann beispielsweise der Quellcodegenerator 33 anhand der Teilstrukturen A1, A2, A3 Quellcode B1, B2, B3 oder Varianten davon zur Überarbeitung und Bearbeitung durch den Bediener BP an der Bedienschnittstelle 31 erzeugen.

Der Quellcode B1, B2, B3, den der Quellcodegenerator 33 bereitstellt, ist vorzugsweise in derselben Programmiersprache, beispielsweise C, die der Bediener BP ursprünglich zur Erzeugung des Basis-Quellcode genutzt hat. Es ist aber auch möglich, dass der Quellcodegenerator 33 diesen zur Überarbeitung vorgeschlagenen Quellcode in einer anderen Programmiersprache ausgibt, zum Beispiel Java.

Die Wartung und Überarbeitung von Software, insbesondere die Überarbeitung und Wartung eines Modells, welches die Steuergeräte 94-96 sowie andere Komponenten des Kraftfahrzeugs 90, Anforderungen an die Software, Verwaltung von Fehlern und dergleichen repräsentiert, ist anhand der Datenbank 50 und der abstrakten syntaktischen Strukturen, die darin den jeweiligen Objekten zugeordnet sind, deutlich erleichtert.

Zum Beispiel ist eine häufige Situation, dass Steuergeräte unterschiedlicher Hersteller und/oder Generationen, d. h. beispielsweise mit unterschiedlicher Hardware, unterschiedlichen Prozessoren und dergleichen mehr, innerhalb einer Fahrzeugserie jeweils mit Software zu versorgen sind. Die Wartung derartiger Software, insbesondere die Versionskontrolle und dergleichen, ist wesentlich und gestaltet sich anhand der Datenbank 50 bzw. des Programmmoduls 30 sehr einfach wie folgt:
Für das Steuergerät 95 sind beispielsweise unterschiedliche Ausgabeschnittstellen 95A1 und 95A2 vorgesehen, zum Beispiel zur Ansteuerung unterschiedlicher Antriebsmotoren des bereits erwähnten Fensterhebers. Grundsätzlich bleibt die Funktion des Steuergerätes 95 gleich, beispielsweise in Bezug auf Sensoren, die Meldesignale sodass bei unterschiedlichen Versionen oder Varianten des Steuergeräts 95 zwar unterschiedliche Ausgabeschnittstellen 95A1 und 95A2 vorgesehen sind, jedoch die Eingabeschnittstelle 95E identisch ist.

Für die unterschiedlichen Ausgabeschnittstellen 95A1 und 95A2 kann der Bediener BP an der Bedienschnittstelle 31 Quellcodemodule B31 und B32 eingeben, d. h. Varianten des Quellcodes oder Quellcodemoduls B3.

Bedienschnittstelle 31 kommuniziert z.B. mit einer eine Schnittstelle SS31 zum Erfassen von dem in einer Programmiersprache an der Bedienschnittstelle erstelltem und kompilierbarem Quellcode Q99. Die Schnittstelle SS31 kann einen Bestandteil der Bedienschnittstelle 31 bilden.

Der Syntaxstrukturgenerator 32 erzeugt anhand der Quellcodemodule B31 und B32 die alternativen Teilstrukturen A31, A32. Die alternativen Teilstrukturen A31, A32 sind Objekten M95A1 und M95A2 der Ausgabeschnittstellen 95A1 und 95A2 zugeordnet oder zuordenbar. Beispielsweise sind logische Verbindungen V31 und V32 zwischen den Teilstrukturen A31, A32 sind Objekten M95A1 und M95A2 vorgesehen. Der Bediener BP kann beispielsweise an der Bedienschnittstelle 31 die Quellcodemodule B31, B32 den Objekten M95A1 und M95A2 zuordnen, zum Beispiel anhand einer Maus-Operation, der Eingabe von Namen der Objekte M95A1 und M95A2 etc., wobei der Syntaxstrukturgenerator 32 derartige Steuerbefehle übernimmt und die logischen Verbindungen V31 und V32 zwischen den Teilstrukturen A31, A32 sind Objekten M95A1 und M95A2 herstellt. Der Syntaxstrukturgenerator 32 bildet und/oder umfasst daher ein Verbindungsmittel VB32 zur Herstellung logischer Verbindungen, z.B. der logischen Verbindungen V31 und V32.

Die Teilstruktur A32 ist beispielsweise sozusagen ausgehend von der Teilstruktur A31 gebildet worden, indem beispielsweise Quellcode aus der der Teilstruktur A31 gebildet und an der Bedienschnittstelle 31 editiert und überarbeitet wurde, um daraus die Teilstruktur A32 zu generieren.

Bevorzugt ist zu der Teilstruktur A32 eine Änderungsinformation I32 in der Datenbank 50 abgelegt, die Änderungen der Teilstruktur A32 gegenüber der Teilstruktur A31 dokumentiert, beispielsweise einen Zeitpunkt der Änderung und/oder eine Information, wer die Änderung vorgenommen hat und/oder welche Änderungen vorgenommen wurden, enthält.

Wenn das Programmmodul 30 nun für das Steuergerät 95 in der Variante mit der Ausgabeschnittstelle 95A1 das Softwaremodul 99 erzeugen soll, wird beispielsweise das Objekt M95A1 aktiviert und/oder ausgewählt, sodass der Quellcodegenerator 33 Quellcode S31 anhand der Teilstruktur A31 der abstrakten syntaktischen Struktur A99 als Bestandteil des Quellcodes S99 erzeugt, anhand dessen dann der Compiler 34 das Softwaremodul 99 in einer für das Steuergerät mit der Ausgabeschnittstelle 95A1 geeigneten Varianten erzeugt. Wenn die Ausgabeschnittstelle 95A2 bei dem Steuergerät 95 vorhanden ist, wird entsprechend Quellcode S3 2 anhand der Teilstruktur A32 vom Quellcodegenerator 33 bereitgestellt, um ein entsprechend alternatives Softwaremodul 99 für das Steuergerät 95 in der Variante mit der Ausgabeschnittstelle 95A2 zu erzeugen.

Mehrere Bediener BP können gleichzeitig das Programmmodul 30 und die Datenbank 50 nutzen. Dazu wird nur jeweils ein von einem jeweiligen Benutzer zu bearbeitender Teil der Daten der Datenbank 50 gegenüber einer Nutzung durch einen anderen Nutzer gesperrt oder blockiert. Wenn also beispielsweise ein Bediener an der Bedienschnittstelle 31 oder einer dazu parallelen, in der Zeichnung nicht dargestellten Bedienschnittstelle des Programmmoduls 30, Quellcode bearbeiten möchte. So kann der Quellcodegenerator 33 beispielsweise anhand der Teilstruktur A31 den Quellcode B31 erzeugen, der nur durch einen Bediener bearbeitet werden kann, während ein anderer Bediener beispielsweise aus der Teilstruktur A32 erzeugten Quellcodes B32 parallel bearbeiten darf. Wenn die Bearbeitung eines jeweiligen Quellcodes B31 oder B32 abgeschlossen ist, erzeugt der Syntaxstrukturgenerator 32 wiederum überarbeitete Teilstrukturen A31 und A32 oder neue Versionen davon (zur Vereinfachung nicht dargestellt).

Weiterhin ist es möglich, dass an der Bedienschnittstelle 31 die abstrakte syntaktische Struktur A99 oder Teilen davon, beispielsweise deren Teilstrukturen, z.B. die Teilstrukturen A31 und A32, in unterschiedlichen Darstellungen bereitgestellt werden, beispielsweise als Quelltext Q99 oder als UML-Diagramm U99.

Möglich ist auch, dass beispielsweise der Quelltext Q99 in der Programmiersprache C an der Bedienschnittstelle 31 angezeigt wird oder alternativ als Quelltext J99 in Java.

In der Datenbank 50 können jedoch auch weitere Objekte gespeichert sein, nicht nur Modelle oder Objekte für Hardware oder Steuergeräte, beispielsweise die Steuergeräte 95 und 96. So können beispielsweise Anforderungen, insbesondere technische Anforderungen, Softwareanforderungen oder dergleichen, R1, R2, R3 als Anforderungen RE in der Datenbank 50 abgelegt sein.

Auch Testdaten TD, beispielsweise individuelle Testdaten T1, T2, T3, Fehlerdaten FM, insbesondere individuelle Fehlerdaten F1, F2 und F3 können in der Datenbank 50 gespeichert sein.

Die Anforderungen RE, Testdaten TD und Fehler FM sind in teilweise nicht dargestellter Weise untereinander verknüpfbar, so z.B. die Anforderungen R1 und R2, aber auch mit anderen Objekten. So kann beispielsweise die Anforderung R1 mit den Testdaten T2 und den entsprechenden Fehlern oder Fehlerdaten F3 durch entsprechende Verbindungen V1, V2 verknüpft sein.

Weiterhin ist es möglich, eine logische Verknüpfung nicht nur mit einem Quellcode als Ganzes, was vielleicht noch im Stand der Technik möglich war, sondern mit dessen einzelnen Teilen und zwar in abstrakter Form herzustellen. So kann beispielsweise eine logische Verbindung V3 zwischen der Anforderung R2 und der abstrakten Teilstruktur A2 sowie eine weitere logische Verbindung V4 zwischen der Anforderung R3 und der abstrakten Teilstruktur A3 hergestellt werden.

Auch eine Korrelation mit beispielsweise einer Dokumentation DO, insbesondere Teildokumentationen D1 und D2, sind ohne weiteres möglich. So ist beispielsweise eine Teildokumentation D1 anhand einer logischen Verbindung V5 mit der abstrakten Teilstruktur A3 verknüpft oder verknüpfbar.

Des Weiteren ist es möglich, eine Verknüpfung von Fehlern, die beispielsweise durch Teilstrukturen der abstrakten Struktur A99 erzeugt werden, herzustellen. Eine logische Verbindung V6 ist beispielsweise zwischen der abstrakten Teilstruktur A2 und dem Fehler F3 oder der Fehlerreihe F3 in der Datenbank 50 hergestellt oder herstellbar.

Es ist ferner möglich, auch einzelne Teile von Objekten, beispielsweise die Teilobjekte M95E, M95A des Objekts M95 mit einzelnen abstrakten Teilstrukturen, d.h. nicht mit dem Quellcode eines Softwaremoduls als Ganzes, logisch zu verbinden. Beispielsweise sind logische Verbindungen V7 und V8 zwischen den abstrakten Teilstrukturen A2 und dem (Teil-)Objekt M95E bzw. der abstrakten Teilstruktur A3 und dem (Teil-)Objekt M95A hergestellt.

Unter anderem ist in der Datenbank 50 ein Objekt M96 für das Steuergerät 96 enthalten, welches ebenfalls Attribute M96E und M96A für Eingabe- und Ausgabeschnittstellen aufweist. In der beschriebenen Weise ist dem Objekt M96 eine abstrakte syntaktische Struktur A95 mit Teilstrukturen A6, A7 und A8 eines nicht weiter detailliert dargestellten Softwaremoduls, welches vom Prozessor 97 des Steuergeräts 96 ausführbar ist, zugeordnet. Zwischen den Attributen M96E und M96A und den Teilstrukturen A7 und A8 sind beispielsweise logische Verbindungen V10, V9 hergestellt.

Die logischen Verbindungen V1-V10 sind vorzugsweise bidirektional, sodass beispielsweise vom Objekt eines Steuergeräts eine Verbindung zur zugehörigen abstrakten syntaktischen Struktur, beispielsweise von dem Objekt M95 zur Struktur A99, vorhanden ist, sodass man ausgehend von einem Steuergerät dessen zugehörige Software finden kann oder umgekehrt ausgehend von einer Software auffinden kann, zu welchem Objekt, beispielsweise welchem Steuergerät, welcher Fehleranalyse oder dergleichen, diese Software gehört.

## Patentansprüche

1. Verfahren zur Verwaltung von Softwaremodulen (99) und von Objekten (M95), insbesondere Steuergeräten (94-96) eines Kraftfahrzeugs (90), in einer Datenbank (50), in der Objekte (M95) gespeichert sind und in der einem jeweiligen Objekt (M95) mindestens ein Softwaremodul (99) zur Bereitstellung mindestens einer Funktion des Objektes (M95) zugeordnet ist, durch eine Vorrichtung (20) zur Verwaltung von Softwaremodulen (99) mit den Schritten:
- Erfassen von in einer Programmiersprache an einer Bedienschnittstelle (31) erstelltem und kompilierbarem Quellcode (Q99) für das mindestens eine Softwaremodul (99) an einer Schnittstelle (SS31) der Vorrichtung (20),
- Erzeugung einer abstrakten syntaktischen Struktur (A99) des Softwaremoduls (99) durch syntaktisches Analysieren des Quellcodes (Q99) durch Erzeugungsmittel (E32) der Vorrichtung (20),
- Speichern der abstrakten syntaktischen Struktur (A99) in der Datenbank (50) durch Speichermittel (S32) der Vorrichtung (20),
- Herstellung mindestens einer logischen Verbindung (V1-V10) zwischen dem Objekt (M95) und der abstrakten syntaktischen Struktur (A99) des Softwaremoduls (99) oder eines Teils davon durch Verbindungsmittel (V32) der Vorrichtung (20),
- Erzeugen von bearbeitbarem Quellcode (Q99) in einer Programmiersprache des in der Datenbank (50) gespeicherten Softwaremoduls (99) oder eines Teils davon anhand der mindestens einen dem Softwaremodul (99) zugeordneten abstrakten syntaktischen Struktur (A99),
- Bereitstellen des Quellcodes (Q99) zur Bearbeitung durch einen Bediener für die Bedienschnittstelle (31) oder an der Bedienschnittstelle (31),
- Erfassen des durch den Bediener bearbeiteten Quellcodes (Q99) und Erzeugung einer überarbeiteten abstrakten syntaktischen Struktur (A99) des Softwaremoduls (99) durch syntaktisches Analysieren des bearbeiteten Quellcodes (Q99), und
- Speichern der überarbeiteten abstrakten syntaktischen Struktur (A99) in der Datenbank (50) unter Beibehaltung und/oder Aktualisierung der mindestens einen logischen Verbindung (V1-V10) zwischen der vor der Bearbeitung des Quellcodes (Q99) gespeicherten abstrakten syntaktischen Struktur (A99) des Softwaremoduls (99) oder eines Teils davon und dem Objekt (M95).

2. Verfahren nach Anspruch 1, **gekennzeichnet durch** Erzeugen von Programmcode mit durch einen Prozessor (97) ausführbaren Befehlen unmittelbar aus der gespeicherten abstrakten syntaktischen Struktur (A99) oder anhand von aus der gespeicherten abstrakten syntaktischen Struktur (A99) in einer Programmiersprache erzeugtem Quellcode (S99) oder Bereitstellung eines Quellcodes (S99) zur Erzeugung von Programmcode mit durch einen Prozessor ausführbaren Befehlen anhand der abstrakten syntaktischen Struktur (A99) des Softwaremoduls (99) durch die Vorrichtung zur Verwaltung von Softwaremodulen (99).

3. Verfahren nach Anspruch 1 oder 2, **gekennzeichnet durch** Speichern mindestens zweier Varianten oder Versionen (A31, A32) der abstrakten syntaktischen Struktur (A99) des Softwaremoduls (99) oder deren Teilstrukturen (A1, A2, A3, AX) unter Beibehaltung und/oder Aktualisierung der mindestens einen logischen Verbindung (V1-V10) durch die Vorrichtung zur Verwaltung von Softwaremodulen (99).

4. Verfahren nach einem der vorhergehenden Ansprüche, **gekennzeichnet durch** Speichern der mindestens zwei Varianten oder Versionen der abstrakten syntaktischen Struktur (A99) in Gestalt vollständiger abstrakter syntaktischer Strukturen (A99) und/oder in Gestalt einer vollständigen abstrakten syntaktischen Struktur (A99) und Unterschieden zwischen dieser vollständigen abstrakten syntaktischen Struktur (A99) und der jeweils anderen abstrakten syntaktischen Struktur (A99) durch die Vorrichtung zur Verwaltung von Softwaremodulen (99).

5. Verfahren nach einem der vorhergehenden Ansprüche, **gekennzeichnet durch** Speichern von mindestens zwei Varianten oder Versionen der abstrakten syntaktischen Teilstrukturen (A1, A2, A3, AX) und von mindestens zwei Varianten oder Versionen der Objekte (RE, TD, FM, DO, M95, M96,..) in der Datenbank (50) unter Beibehaltung und/oder Aktualisierung der logischen Verbindungen (V1-V10) zwischen den Varianten oder Versionen der abstrakten syntaktischen Teilstrukturen (A1, A2, A3, AX) und der diesen jeweils zugeordneten Variante oder Version des Objektes (RE, TD, FM, DO, M95, M96,..) durch die Vorrichtung zur Verwaltung von Softwaremodulen (99).

6. Verfahren nach Anspruch 4 oder 5, **dadurch gekennzeichnet, dass** zu mindestens einer Variante oder Version der abstrakten syntaktischen Teilstruktur (A1, A2, A3, AX) und/oder mindestens einer Variante oder Version eines jeweiligen Objekts (RE, TD, FM, DO, M95, M96,..) eine Änderungsinformation (I32) gespeichert wird durch die Vorrichtung zur Verwaltung von Softwaremodulen (99).

7. Verfahren nach Anspruch 4, 5 oder 6, **gekennzeichnet durch** eine einheitliche Versionierung einer jeweiligen abstrakten syntaktischen Teilstruktur (A1, A2, A3, AX) und der dieser jeweils zugeordneten Variante oder Version des Objektes (RE, TD, FM, DO, M95, M96,..) durch die Vorrichtung zur Verwaltung von Softwaremodulen (99), so dass jeweils einer Variante der Teilstruktur eine Variante des Objektes zugeordnet ist und/oder jeweils einer Variante des Objekts jeweils eine Variante der Teilstruktur zugeordnet ist.

8. Verfahren nach einem der vorhergehenden Ansprüche, **gekennzeichnet durch** Ermittlung mindestens zweier Teilstrukturen (A99) (A1, A2, A3) einer abstrakten syntaktischen Struktur (A99) eines einem Objekt (M95) zugeordneten Softwaremoduls (99) und individuelle Bereitstellung der mindestens zwei Teilstrukturen (A99) (A1, A2, A3) zur Bearbeitung an der Bedienschnittstelle (31) durch die Vorrichtung zur Verwaltung von Softwaremodulen (99).

9. Verfahren nach einem der vorhergehenden Ansprüche, **gekennzeichnet durch** Sperren eines verändernden Zugriffs auf die abstrakte syntaktische Struktur (A99) des Softwaremoduls (99) als Ganzes oder des zur Bearbeitung durch den Bediener an der Bedienschnittstelle (31) bereitgestellten Teils (A1, A2, A3, AX) davon während der Bereitstellung des aus der syntaktischen Struktur (A99) oder des Teils (A1, A2, A3, AX) davon erzeugten Quellcodes (Q99) zur Bearbeitung durch einen Bediener durch die Vorrichtung zur Verwaltung von Softwaremodulen (99).

10. Verfahren nach einem der vorhergehenden Ansprüche, **dadurch gekennzeichnet, dass** die mindestens eine logische Verbindung (V1-V10) zwischen dem Objekt (M95) und der abstrakten syntaktischen Struktur (A99) oder deren Teilstruktur (A1, A2, A3, AX) des Softwaremoduls (99) bidirektional ist, sodass die abstrakte syntaktische Struktur (A99) ausgehend von dem Objekt (M95) ermittelbar ist und das Objekt (M95) ausgehend von der abstrakten syntaktischen Struktur (A99) ermittelbar ist.

11. Verfahren nach einem der vorhergehenden Ansprüche, **gekennzeichnet durch** Herstellung einer ersten logischen Verbindung (V1-V10) zwischen einem ersten Teil der abstrakten syntaktischen Struktur (A99) des Softwaremoduls (99) und dem Objekt (M95), dem das Softwaremodul (99) zugeordnet ist, und mindestens einer zweiten logischen Verbindung (V1-V10) zwischen mindestens einem zweiten Teil der abstrakten syntaktischen Struktur (A99) des Softwaremoduls (99) und dem Objekt (M95), dem das Softwaremodul (99) zugeordnet ist, durch die Vorrichtung zur Verwaltung von Softwaremodulen (99).

12. Verfahren nach einem der vorhergehenden Ansprüche, **gekennzeichnet durch** Erzeugen von Objekten (M95) und/oder abstrakten syntaktischen Teilstrukturen (A1, A2, A3) in der Datenbank (50) durch Zuordnung von, insbesondere frei konfigurierbaren, Attributen zu einem jeweiligen Objekt (M95) und/oder zu abstrakten syntaktischen Teilstrukturen (A1, A2, A3, AX) durch die Vorrichtung zur Verwaltung von Softwaremodulen (99) und/oder **gekennzeichnet durch** Herstellung einer logischen Verbindung (V1-V10), insbesondere durch eine Vorgabe eines Bedieners an der Bedienschnittstelle (31), zwischen mindestens zwei, vorzugsweise mehreren, Objekten (M95) und/oder abstrakten syntaktischen Teilstrukturen (A1, A2, A3, AX) in der Datenbank (50) durch die Vorrichtung zur Verwaltung von Softwaremodulen (99).

13. Verfahren nach einem der vorhergehenden Ansprüche, **gekennzeichnet durch** Bereitstellung mindestens zweier voneinander verschiedenen Darstellungen, insbesondere als Quelltext und/oder als Baumstruktur und/oder als UML Diagramm, der abstrakten syntaktischen Struktur (A99) oder Teilen davon an der Bedienschnittstelle (31) durch die Vorrichtung zur Verwaltung von Softwaremodulen (99).

14. Vorrichtung zur Verwaltung von Softwaremodulen (99) und von Objekten (M95) wobei die Vorrichtung eine Datenbank (50) aufweist, in der Objekte (M95) gespeichert sind und in der einem jeweiligen Objekt (M95) mindestens ein Softwaremodul (99) zur Bereitstellung mindestens einer Funktion des Objektes (M95) zugeordnet ist, wobei sie eine Schnittstelle (SS31) zum Erfassen von in einer Programmiersprache an einer Bedienschnittstelle (31) erstelltem und kompilierbarem Quellcode (Q99) für das mindestens eine Softwaremodul (99) aufweist,
dadurch charakterisiert,
- dass sie Erzeugungsmittel (E32) zur Erzeugung einer abstrakten syntaktischen Struktur (A99) des Softwaremoduls (99) durch syntaktisches Analysieren des Quellcodes (Q99) aufweist,
- dass sie Speichermittel (SP32) zum Speichern der abstrakten syntaktischen Struktur (A99) in der Datenbank (50) aufweist,
- dass sie Verbindungsmittel (VB32) zur Herstellung mindestens einer logischen Verbindung (V1-V10) zwischen dem Objekt (M95) und der abstrakten syntaktischen Struktur (A99) des Softwaremoduls (99) oder eines Teils davon, insbesondere einer abstrakten syntaktischen Teilstruktur (A1, A2, A3), aufweist,
- dass die Vorrichtung die Bedienschnittstelle (31) umfasst oder die Schnittstelle (SS31) zur Kommunikation mit der Bedienschnittstelle (31) ausgestaltet ist,
- dass sie Mittel zum Erzeugen von bearbeitbarem Quellcode (Q99) in einer Programmiersprache des in der Datenbank (50) gespeicherten Softwaremoduls (99) oder eines Teils davon anhand der mindestens einen dem Softwaremodul (99) zugeordneten abstrakten syntaktischen Struktur (A99) aufweist,
- dass sie Mittel zum Bereitstellen des Quellcodes (Q99) zur Bearbeitung durch einen Bediener für die Bedienschnittstelle (31) oder an der Bedienschnittstelle (31) aufweist,
- dass sie Mittel zum Erfassen des durch den Bediener bearbeiteten Quellcodes (Q99) und zur Erzeugung einer überarbeiteten abstrakten syntaktischen Struktur (A99) des Softwaremoduls (99) durch syntaktisches Analysieren des bearbeiteten Quellcodes (Q99), aufweist und
- dass sie Mittel zum Speichern der überarbeiteten abstrakten syntaktischen Struktur (A99) in der Datenbank (50) unter Beibehaltung und/oder Aktualisierung der mindestens einen logischen Verbindung (V1-V10) zwischen der vor der Bearbeitung des Quellcodes (Q99) gespeicherten abstrakten syntaktischen Struktur (A99) des Softwaremoduls (99) oder eines Teils davon und dem Objekt (M95) aufweist.

15. Computerprogrammprodukt mit Programmcode, der durch einen Prozessor (21) einer Vorrichtung (20) ausführbare Befehle enthält, bei deren Ausführung das Verfahren nach einem der Ansprüche 1 bis 13 von der Vorrichtung ausgeführt wird.

## Claims

1. A method for the management of software modules (99) and objects (M95), in particular control units (94-96) of a motor vehicle (90), in a database (50), in which objects (M95) are stored and in which at least one software module (99) for provision of at least one function of the object (M95) is associated with a respective object (M95), by a device (20) for managing software modules (99), comprising the steps of:
- acquiring compilable source code (Q99) developed in a programming language at an operating interface (31) for the at least one software module (99) at an interface (SS31) of the device (20),
- generation of an abstract syntactic structure (A99) of the software module (99) by syntactic analysis of the source code (Q99) by generating means (E32) of the device (20),
- storing the abstract syntactic structure (A99) in the database (50) by storage means (SP32) of the device (20), and
- establishment of at least one logical connection (V1-V10) between the object (M95) and the abstract syntactic structure (A99) of the software module (99) or a part thereof by connecting means (VB32) of the device (20)
- generating processable source code (Q99) in a programming language of the software module (99) stored in the database (50) or a part thereof on the basis of the at least one abstract syntactic structure (A99) associated with the software module (99),
- providing the source code (Q99) for processing by an operator for the operating interface (31) or at the operating interface (31),
- acquiring the source code (Q99) processed by the operator and generation of a reworked abstract syntactic structure (A99) of the software module (99) by syntactic analysis of the processed source code (Q99), and
- storing the reworked abstract syntactic structure (A99) in the database (50) while maintaining and/or updating the at least one logical connection (V1-V10) between the abstract syntactic structure (A99) of the software module (99) stored before the processing of the source code (Q99) or a part thereof and the object (M95).

2. The method according to Claim 1, **characterized by** generating program code having commands executable by a processor (97) directly from the stored abstract syntactic structure (A99) or on the basis of source code (S99) generated from the stored abstract syntactic structure (A99) in a programming language or provision of a source code (S99) for generation of program code having commands executable by a processor on the basis of the abstract syntactic structure (A99) of the software module (99) by the device (20) for managing software modules (99).

3. The method according to Claim 1 or 2, **characterized by** storing at least two variants or versions (A31, A32) of the abstract syntactic structure (A99) of the software module (99) or its substructures (A1, A2, A3, AX) while maintaining and/or updating the at least one logical connection (V1-V10) by the device (20) for managing software modules (99).

4. The method according to any one of the preceding claims, **characterized by** storing the at least two variants or versions of the abstract syntactic structure (A99) in the form of complete abstract syntactic structures (A99) and/or in the form of a complete abstract syntactic structure (A99) and differentiating between this complete abstract syntactic structure (A99) and the respective other abstract syntactic structure (A99) by the device (20) for managing software modules (99).

5. The method according to any one of the preceding claims, **characterized by** storing of at least two variants or versions of the abstract syntactic substructures (A1, A2, A3, AX) and of at least two variants or versions of the objects (RE, TD, FM, DO, M95, M96,..) in the database (50) while maintaining and/or updating the logical connections (V1-V10) between the variants or versions of the abstract syntactic substructures (A1, A2, A3, AX) and the respective variant or version of the object (RE, TD, FM, DO, M95, M96,..) associated therewith by the device (20) for managing software modules (99).

6. The method according to Claim 4 or 5, **characterized in that**, for at least one variant or version of the abstract syntactic substructure (A1, A2, A3, AX) and/or at least one variant or version of a respective object (RE, TD, FM, DO, M95, M96,..) an item of change information (132) is stored by the device (20) for managing software modules (99).

7. The method according to Claim 4, 5 or 6, **characterized by** uniform versioning of a respective abstract syntactic substructure (A1, A2, A3, AX) and the respective variant or version of the object (RE, TD, FM, DO, M95, M96,..) associated therewith by the device (20) for managing software modules (99), so that in each case a variant of the object is associated with a variant of the substructure and/or in each case a variant of the substructure is associated with a variant of the object.

8. The method according to any one of the preceding claims, **characterized by** ascertainment of at least two substructures (A99) (A1, A2, A3) of an abstract syntactic structure (A99) of a software module (99) associated with an object (M95) and individually provision of the at least two substructures (A99) (A1, A2, A3) for processing at the operating interface (31) by the device (20) for managing software modules (99).

9. The method according to any one of the preceding claims, **characterized by** blocking a modifying access to the abstract syntactic structure (A99) of the software module (99) as a whole or the part (A1, A2, A3, AX) thereof provided for processing by the operator at the operating interface (31) during the provision of the source code (Q99) generated from the syntactic structure (A99) or the part (A1, A2, A3, AX) thereof for processing by an operator by the device (20) for managing software modules (99).

10. The method according to any one of the preceding claims, **characterized in that** the at least one logical connection (V1-V10) between the object (M95) and the abstract syntactic structure (A99) or its substructure (A1, A2, A3, AX) of the software module (99) is bidirectional, so that the abstract syntactic structure (A99) can be ascertained proceeding from the object (M95) and the object (M95) can be ascertained proceeding from the abstract syntactic structure (A99).

11. The method according to any one of the preceding claims, **characterized by** establishment of a first logical connection (V1-V10) between a first part of the abstract syntactic structure (A99) of the software module (99) and the object (M95), with which the software module (99) is associated, and at least one second logical connection (V1-V10) between at least one second part of the abstract syntactic structure (A99) of the software module (99) and the object (M95), with which the software module (99) is associated by the device (20) for managing software modules (99).

12. The method according to any one of the preceding claims, **characterized by** generation of objects (M95) and/or abstract syntactic substructures (A1, A2, A3) in the database (50) by association of, in particular freely configurable, attributes, with a respective object (M95) and/or with abstract syntactic substructures (A1, A2, A3, AX) by the device (20) for managing software modules (99) and/or **characterized by** establishment of a logical connection (V1-V10), in particular by a specification of an operator at the operating interface (31), between at least two, preferably multiple objects (M95) and/or abstract syntactic substructures (A1, A2, A3, AX) in the database (50) by the device (20) for managing software modules (99).

13. The method according to any one of the preceding claims, **characterized by** provision of at least two representations different from one another, in particular as a source text and/or as a tree structure and/or as a UML diagram, of the abstract syntactic structure (A99) or parts thereof at the operating interface (31).

14. A device for the management of software modules (99) and objects (M95), wherein the device comprises a database (50), in which objects (M95) are stored and in which at least one software module (99) for provision of at least one function of the object (M95) is associated with a respective object (M95), wherein it comprises an interface (SS31) for acquisition of compilable source code (Q99) developed in a programming language at an operating interface (31) for the at least one software module (99),
**characterized in**
- **that** it comprises generating means (E32) for generation of an abstract syntactic structure (A99) of the software module (99) by syntactic analysis of the source code (Q99),
- **that** it comprises storage means (SP32) for storing the abstract syntactic structure (A99) in the database (50),
- **that** it comprises connecting means (VB32) for establishment of at least one logical connection (V1-V10) between the object (M95) and the abstract syntactic structure (A99) of the software module (99) or a part thereof, in particular an abstract syntactic substructure (A1, A2, A3),
- **that** the device comprises the operating interface (31) or the interface (SS31) is designed for communication with the operating interface (31),
- **that** it has generating processable source code (Q99) in a programming language of the software module (99) stored in the database (50) or a part thereof on the basis of the at least one abstract syntactic structure (A99) associated with the software module (99),
- **that** it has means for providing the source code (Q99) for processing by an operator for the operating interface (31) or at the operating interface (31),
- **that** it has means for acquiring the source code (Q99) processed by the operator and generation of a reworked abstract syntactic structure (A99) of the software module (99) by syntactic analysis of the processed source code (Q99), and
- **that** it has means for storing the reworked abstract syntactic structure (A99) in the database (50) while maintaining and/or updating the at least one logical connection (V1-V10) between the abstract syntactic structure (A99) of the software module (99) stored before the processing of the source code (Q99) or a part thereof and the object (M95).

15. A computer program product having program code which contains commands executable by a processor (21) of a device (20), upon the execution of which the method according to any one of Claims 1 to 13 is executed by the device.

## Revendications

1. Procédé de gestion des modules logiciels (99) et des objets (M95), en particulier des appareils de commande (94-96) d'un véhicule à moteur (90), dans une base de données (50) dans laquelle des objets (M95) sont mémorisés et dans laquelle au moins un module logiciel (99) est attribué à un objet (M95) respectif pour la mise à disposition d'au moins une fonction de l'objet (M95), par un dispositif (20) de gestion des modules logiciels (99) comprenant les étapes suivantes :
- détection du code source (Q99) créé dans un langage de programmation au niveau d'une interface utilisateur (31) et compilable pour ledit au moins un module logiciel (99) au niveau d'une interface (SS31) du dispositif (20),
- génération d'une structure syntaxique abstraite (A99) du module logiciel (99) par analyse syntaxique du code source (Q99) par des moyens de génération (E32) du dispositif (20),
- mémorisation de la structure syntaxique abstraite (A99) dans la base de données (50) par des moyens de mémorisation (S32) du dispositif (20),
- établissement d'au moins une liaison logique (V1-V10) entre l'objet (M95) et la structure syntaxique abstraite (A99) du module logiciel (99) ou d'une partie de celui-ci par des moyens de liaison (V32) du dispositif (20),
- génération d'un code source (Q99) modifiable dans un langage de programmation du module logiciel (99) mémorisé dans la base de données (50) ou d'une partie de celui-ci à l'aide de ladite au moins une structure syntaxique abstraite (A99) attribuée au module logiciel (99),
- mise à disposition du code source (Q99) pour la modification par un opérateur pour l'interface utilisateur (31) ou au niveau de l'interface utilisateur (31),
- détection du code source (Q99) modifié par l'opérateur et génération d'une structure syntaxique abstraite révisée (A99) du module logiciel (99) par analyse syntaxique du code source (Q99) modifié, et
- mémorisation de la structure syntaxique abstraite révisée (A99) dans la base de données (50) en maintenant et/ou en actualisant ladite au moins une liaison logique (V1-V10) entre la structure syntaxique abstraite (A99) du module logiciel (99) ou d'une partie de celui-ci mémorisée avant la modification du code source (Q99) et l'objet (M95).

2. Procédé selon la revendication 1, **caractérisé par** la génération d'un code de programme comprenant des instructions exécutables par un processeur (97) directement à partir de la structure syntaxique abstraite (A99) mémorisée ou à l'aide d'un code source (S99) généré à partir de la structure syntaxique abstraite (A99) mémorisée dans un langage de programmation, ou la mise à disposition d'un code source (S99) permettant la génération d'un code de programme comprenant des instructions exécutables par un processeur à l'aide de la structure syntaxique abstraite (A99) du module logiciel (99) par le dispositif de gestion des modules logiciels (99).

3. Procédé selon la revendication 1 ou 2, **caractérisé par** la mémorisation d'au moins deux variantes ou versions (A31, A32) de la structure syntaxique abstraite (A99) du module logiciel (99) ou de leurs sous-structures (A1, A2, A3, AX) en maintenant et/ou en actualisant ladite au moins une liaison logique (V1-V10) par le dispositif de gestion des modules logiciels (99).

4. Procédé selon l'une quelconque des revendications précédentes, **caractérisé par** la mémorisation desdites au moins deux variantes ou versions de la structure syntaxique abstraite (A99) sous forme de structures syntaxiques abstraites complètes (A99) et/ou sous forme d'une structure syntaxique abstraite complète (A99) et de différences entre cette structure syntaxique abstraite complète (A99) et l'autre structure syntaxique abstraite (A99) respective par le dispositif de gestion des modules logiciels (99).

5. Procédé selon l'une quelconque des revendications précédentes, **caractérisé par** la mémorisation d'au moins deux variantes ou versions des sous-structures syntaxiques abstraites (A1, A2, A3, AX) et d'au moins deux variantes ou versions des objets (RE, TD, FM, DO, M95, M96,..) dans la base de données (50) en maintenant et/ou en actualisant les liaisons logiques (V1-V10) entre les variantes ou versions des sous-structures syntaxiques abstraites (A1, A2, A3, AX) et la variante ou version respective de l'objet (RE, TD, FM, DO, M95, M96,..) qui leur est attribuée par le dispositif de gestion des modules logiciels (99).

6. Procédé selon la revendication 4 ou 5, **caractérisé en ce qu'**une information de modification (I32) est mémorisée pour au moins une variante ou version de la sous-structure syntaxique abstraite (A1, A2, A3, AX) et/ou au moins une variante ou version d'un objet (RE, TD, FM, DO, M95, M96,..) respectif par le dispositif de gestion des modules logiciels (99).

7. Procédé selon la revendication 4, 5 ou 6, **caractérisé par** un versionnage uniforme d'une sous-structure syntaxique abstraite (A1, A2, A3, AX) respective et de la variante ou version respective de l'objet (RE, TD, FM, DO, M95, M96,..) qui lui est attribuée par le dispositif de gestion des modules logiciels (99), de sorte qu'une variante de la sous-structure est respectivement attribuée à une variante de l'objet et/ou qu'une variante de la sous-structure est respectivement attribuée à une variante de l'objet respectif.

8. Procédé selon l'une quelconque des revendications précédentes, **caractérisé par** la détermination d'au moins deux sous-structures (A99) (A1, A2, A3) d'une structure syntaxique abstraite (A99) d'un module logiciel (99) attribué à un objet (M95) et la mise à disposition individuelle desdites au moins deux sous-structures (A99) (A1, A2, A3) pour la modification au niveau de l'interface utilisateur (31) par le dispositif de gestion des modules logiciels (99).

9. Procédé selon l'une quelconque des revendications précédentes, **caractérisé par** le blocage d'un accès de modification à la structure syntaxique abstraite (A99) du module logiciel (99) dans son ensemble ou à la partie (A1, A2, A3, AX) de celle-ci mise à disposition pour la modification par l'opérateur au niveau de l'interface utilisateur (31) pendant la mise à disposition du code source (Q99) généré à partir de la structure syntaxique abstraite (A99) ou de la partie (A1, A2, A3, AX) de celle-ci pour la modification par un opérateur par le dispositif de gestion des modules logiciels (99).

10. Procédé selon l'une quelconque des revendications précédentes, **caractérisé en ce que** ladite au moins une liaison logique (V1-V10) entre l'objet (M95) et la structure syntaxique abstraite (A99) ou sa sous-structure (A1, A2, A3, AX) du module logiciel (99) est bidirectionnelle, de sorte que la structure syntaxique abstraite (A99) peut être déterminée à partir de l'objet (M95) et que l'objet (M95) peut être déterminé à partir de la structure syntaxique abstraite (A99).

11. Procédé selon l'une quelconque des revendications précédentes, **caractérisé par** l'établissement d'une première liaison logique (V1-V10) entre une première partie de la structure syntaxique abstraite (A99) du module logiciel (99) et l'objet (M95), auquel le module logiciel (99) est attribué, et d'au moins une deuxième liaison logique (V1-V10) entre au moins une deuxième partie de la structure syntaxique abstraite (A99) du module logiciel (99) et l'objet (M95), auquel le module logiciel (99) est attribué, par le dispositif de gestion des modules logiciels (99).

12. Procédé selon l'une quelconque des revendications précédentes, **caractérisé par** la génération d'objets (M95) et/ou de sous-structures syntaxiques abstraites (A1, A2, A3) dans la base de données (50) par attribution d'attributs, en particulier librement configurables, à un objet (M95) respectif et/ou à des sous-structures syntaxiques abstraites (A1, A2, A3, AX) par le dispositif de gestion des modules logiciels (99) et/ou **caractérisé par** l'établissement d'une liaison logique (V1-V10), en particulier par spécification d'un opérateur au niveau de l'interface utilisateur (31), entre au moins deux, de préférence plusieurs, objets (M95) et/ou sous-structures syntaxiques abstraites (A1, A2, A3, AX) dans la base de données (50) par le dispositif de gestion des modules logiciels (99).

13. Procédé selon l'une quelconque des revendications précédentes, **caractérisé par** la mise à disposition d'au moins deux représentations différentes l'une de l'autre, en particulier sous forme de texte source et/ou sous forme de structure arborescente et/ou sous forme de diagramme UML, de la structure syntaxique abstraite (A99) ou de parties de celle-ci au niveau de l'interface utilisateur (31) par le dispositif de gestion des modules logiciels (99).

14. Dispositif de gestion des modules logiciels (99) et des objets (M95), le dispositif comportant une base de données (50) dans laquelle des objets (M95) sont mémorisés et dans laquelle au moins un module logiciel (99) est attribué à un objet (M95) respectif pour la mise à disposition d'au moins une fonction de l'objet (M95), lequel dispositif comporte une interface (SS31) pour la détection du code source (Q99) créé dans un langage de programmation au niveau d'une interface utilisateur (31) et compilable pour ledit au moins un module logiciel (99), **caractérisé**
- **en ce qu'**il comporte des moyens de génération (E32) pour la génération d'une structure syntaxique abstraite (A99) du module logiciel (99) par analyse syntaxique du code source (Q99),
- **en ce qu'**il comporte des moyens de mémorisation (SP32) pour la mémorisation de la structure syntaxique abstraite (A99) dans la base de données (50),
- **en ce qu'**il comporte des moyens de liaison (VB32) pour l'établissement d'au moins une liaison logique (V1-V10) entre l'objet (M95) et la structure syntaxique abstraite (A99) du module logiciel (99) ou d'une partie de celui-ci, en particulier une sous-structure syntaxique abstraite (A1, A2, A3),
- **en ce que** le dispositif comprend l'interface utilisateur (31) ou en ce que l'interface (SS31) est configurée pour communiquer avec l'interface utilisateur (31),
- **en ce qu'**il comporte des moyens de génération d'un code source (Q99) modifiable dans un langage de programmation du module logiciel (99) mémorisé dans la base de données (50) ou d'une partie de celui-ci à l'aide de ladite au moins une structure syntaxique abstraite (A99) attribuée au module logiciel (99),
- **en ce qu'**il comporte des moyens de mise à disposition du code source (Q99) pour la modification par un opérateur pour l'interface utilisateur (31) ou au niveau de l'interface utilisateur (31),
- **en ce qu'**il comporte des moyens de détection du code source (Q99) modifié par l'opérateur et pour la génération d'une structure syntaxique abstraite révisée (A99) du module logiciel (99) par analyse syntaxique du code source (Q99) modifié, et
- **en ce qu'**il comporte des moyens de mémorisation de la structure syntaxique abstraite révisée (A99) dans la base de données (50) en maintenant et/ou en actualisant ladite au moins une liaison logique (V1-V10) entre la structure syntaxique abstraite (A99) du module logiciel (99) ou d'une partie de celui-ci mémorisée avant la modification du code source (Q99) et l'objet (M95).

15. Produit programme informatique comprenant un code de programme qui contient des instructions exécutables par un processeur (21) d'un dispositif (20), lors de l'exécution desquelles le procédé selon l'une quelconque des revendications 1 à 13 est mis en œuvre par le dispositif.
